# EUROPÄISCHE PATENTANMELDUNG

(11) **EP 2 434 002 A1**
(43) Veröffentlichungstag der Anmeldung: **28.03.2012**
(21) Anmeldenummer: 11179916.9
(22) Anmeldetag: 02.09.2011
(51) Int. Cl.: C10L 3/10, B01J 3/02, B01J 3/03, B01J 19/00, B01J 19/24, B01J 4/00

(54) **Gasclathratherstellungs-Vorrichtung**

(30) Priorität: 28.09.2010 DE 102010037823
(71) Anmelder: Mebes, Reto, 8624 Hombrechtikon (CH)
(72) Erfinder: Bonso, Bernd, Dipl.-Ing., 12555 Berlin (DE)
(74) Vertreter: Rohmann, Michael

(57) **Zusammenfassung**

Gasclathratherstellungs-Vorrichtung mit einem Reaktionsbehälter, mindestens einer Reaktionsgaszuführung und mindestens einer Reaktionsflüssigkeitszuführung. Es ist eine Druckeinheit vorgesehen, mit der der Druck in dem Reaktionsbehälter einstellbar ist. Weiterhin ist eine Temperiereinrichtung zur Einstellung der Temperatur in dem Reaktionsbehälter vorgesehen. An dem Reaktionsbehälter ist ein Aggregat mit einem Auslassstutzen und mit einer Auslassdüse angeschlossen, welche Auslassdüse einen Strömungskanal aufweist. Das in dem Reaktionsbehälter herstellbare Gasclathrat ist durch den Strömungskanal der Auslassdüse aus dem Reaktionsbehälter pressbar. Der Strömungskanal verjüngt sich von einer Eingangsöffnung zu einer Auspressöffnung kontinuierlich und ist rotationssymmetrisch ausgebildet. Eine Strömungskanalwandung ist S-förmig ausgebildet.

## Beschreibung

Die Erfindung betrifft eine Gasclathratherstellungs-Vorrichtung mit einem Reaktionsbehälter, mindestens einer Reaktionsgaszuführung und mindestens einer Reaktionsflüssigkeitszuführung.

Vorrichtungen der vorstehend genannten Art sind aus der Praxis grundsätzlich bekannt. Mit diesen Vorrichtungen ist beispielsweise die Herstellung von Methanhydrat bzw. Methanclathrat möglich. Dazu werden in einen Reaktor bzw. in einen Reaktionsbehälter bei Drücken von zumeist mehr als 60 bar und Temperaturen von ca. 0 °C Methangas und Wasser eingeleitet. Bei den vorstehend genannten Reaktionsbedingungen bildet sich dann eine Gaseinschlussverbindung, bei der Methangas in Hohlräumen von Eiskristallen eingelagert wird. Diese aus der Praxis bekannten Vorrichtungen werden in einem diskontinuierlichen Betrieb eingesetzt, sodass portions- bzw. chargenweise die Herstellung von Methanhydrat erfolgt. Die Herstellung großer Mengen an Gasclathrat ist mit den aus der Praxis bekannten Vorrichtungen jedoch sehr aufwendig, energetisch ungünstig und somit unwirtschaftlich.

Daher liegt der Erfindung das technische Problem zugrunde, eine Vorrichtung zur Herstellung von Gasclathraten anzugeben, die sich durch eine hohe Energieeffizienz, eine einfache Bedienbarkeit bzw. Handhabbarkeit und hohe Wirtschaftlichkeit auszeichnet.

Zur Lösung des technischen Problems lehrt die Erfindung eine Gasclathratherstellungs-Vorrichtung mit einem Reaktionsbehälter, mindestens einer Reaktionsgaszuführung mit mindestens einer Reaktionsflüssigkeitszuführung, wobei eine Druckeinheit vorgesehen ist, mit der der Druck in dem Reaktionsbehälter einstellbar ist, wobei eine Temperiereinrichtung zur Einstellung der Temperatur in dem Reaktionsbehälter vorgesehen ist, wobei an den Reaktionsbehälter ein Aggregat mit einem Auslassstutzen und mit einer Auslassdüse angeschlossen ist, welche Auslassdüse einen Strömungskanal aufweist, wobei das in dem Reaktionsbehälter herstellbare Gasclathrat durch den Strömungskanal der Auslassdüse aus dem Reaktionsbehälter pressbar ist, wobei sich der Strömungskanal von einer Eingangsöffnung zu einer Auspressöffnung kontinuierlich verjüngt und rotationssymmetrisch ausgebildet ist und wobei eine Strömungskanalwandung S-kurvenförmig ausgebildet ist.

Mit der erfindungsgemäßen Vorrichtung ist die Herstellung von Gasclathraten bei den aus der Praxis bekannten, üblichen Bedingungen möglich. Die dazu erforderlichen Bedingungen werden mit der erfindungsgemäßen Druckeinheit und Temperiereinrichtung eingestellt. Als Reaktionsgas können beispielsweise kohlenwasserstoffhaltige Gase (beispielsweise Methan, Naturgase bzw. Erdgas) oder Wasserstoff eingesetzt werden. Es empfiehlt sich, dass als Reaktionsflüssigkeit eine wässrige Lösung und/oder ein organisches Lösungsmittel eingesetzt wird. Vorteilhafterweise wird für eine effektive Clathratbildung die Dichte und/oder die Adsorptionsfähigkeit und/oder die Absorptionsfähigkeit der Reaktionsflüssigkeit durch die Zugabe von Salzen beeinflusst.

Es liegt im Rahmen der Erfindung, dass die spezifische Dichte des gebildeten Gasclathrates geringer ist, als die spezifische Dichte der Reaktionsflüssigkeit. Vorteilhafterweise schwimmt das gebildete Gasclathrat auf der Reaktionsflüssigkeit und verfügt über eine schneeähnliche bzw. schneematschähnliche Beschaffenheit. Durch die vorzugsweise kontinuierliche Bildung des Gasclathrates in dem Reaktionsbehälter nimmt bevorzugt das Volumen des in dem Reaktionsbehälter befindlichen Gasclathrates stetig zu, wodurch das auf der Reaktionsflüssigkeit aufschwimmende Gasclathrat vorteilhafterweise in den Auslaufstutzen und in den Strömungskanal der Auslassdüse gepresst wird. Es hat sich als vorteilhaft herausgestellt, dass eine zusätzliche Temperiereinrichtung in dem Auslaufstutzen vorgesehen ist.

Durch die zusätzliche Temperiereinrichtung ist die Temperatur des Gasclathrates bzw. eines Gasclathratpfropfens in dem Auslaufstutzen mit der Maßgabe einstellbar, dass eine Gasclathratschicht an der Grenzfläche zwischen dem Gasclathratpfropfen und einer Wandung des Auslaufstutzens durch den reaktionsbehälterseitig auf den Gasclathratpropfen ausgeübten Druck aufgeschmolzen wird. Vorteilhafterweise wird dadurch ein Gleitfilm bzw. eine reibungsvermindernde Flüssigkeitsschicht ausgebildet, sodass der Gasclathratpfropfen in Richtung der Auspressöffnung der Auslassdüse vorschiebbar ist.

Die erfindungsgemäße Ausgestaltung des Strömungskanals gewährleistet im Rahmen der Erfindung, dass ein präzise steuerbares Auspressen des Gasclathrates aus der Auspressöffnung der Auslassdüse erfolgt. Zweckmäßigerweise wird durch eine Querschnittsänderung bzw. Querschnittsverminderung des Strömungskanals der Auslassdüse der auf das Gasclathrat wirkende Druck erhöht, wodurch vorteilhafterweise das Gasclathrat verpresst und vorzugsweise überschüssige Reaktionsflüssigkeit aus dem Gasclathrat entfernt wird. Zweckmäßigerweise wird durch den auf das Gasclathrat einwirkenden Druck in dem Strömungskanal ein Flüssigkeitsfilm zwischen der Strömungskanalwandung und dem Gasclathrat erzeugt. Empfohlenermaßen ist das aus der Auspressöffnung ausgepresste Gasclathrat mit einer Transportleitung beispielsweise zu einem Tank abtransportierbar.

Gemäß einer Ausführungsform weist der Strömungskanal einen Strömungswiderstand für das Gasclathrat auf, welcher Strömungswiderstand mit der Maßgabe eingestellt ist, dass das Gasclathrat durch einen Reaktordruck aus der Auslassdüse gepresst wird bzw. pressbar ist, welcher Reaktordruck durch die vorzugsweise kontinuierliche Bildung des Gasclathrates in dem Reaktionsbehälter und/oder in den Reaktionsbehälter gefördetes Reaktionsgas und/oder Reaktionsflüssigkeit aufgebaut ist. Es hat sich als zweckmäßig herausgestellt, dass dem Reaktionsbehälter durch die Reaktionsgaszuführung und Reaktionsflüssigkeitszuführung das Reaktionsgas und die Reaktionsflüssigkeit mit der Maßgabe zuführbar sind, dass der Reaktordruck bzw. der Arbeitsdruck in dem Reaktionsbehälter konstant bzw. im Wesentlichen konstant gehalten wird. Gemäß einer besonders bevorzugten Ausführung ist die Reaktionsgaszuführung und Reaktionsflüssigkeitszuführung der erfindungsgemäßen Vorrichtung derart steuerbar, dass ein Volumen des aus der Auspressöffnung ausgepressten Gasclathrates durch zusätzlich in den Reaktionsbehälter eingebrachtes Reaktionsgas und vorzugsweise eingedüste Reaktionsflüssigkeit ersetzt wird.

Es empfiehlt sich, dass die Strömungskanalwandung aus einem Kunststoff und vorzugsweise aus Polytetrafluorethylen oder einem Polyamid besteht. Vorzugsweise ist die Strömungskanalwandung mit der Maßgabe ausgekleidet, dass zweckmäßigerweise das gebildete Gasclathrat nicht an der Strömungskanalwandung anhaften kann.

Gemäß einer bevorzugten Ausführungsform weist die die Kontur der Strömungskanalwandung angebende S-förmige Kurve einen Wendepunkt auf, der vorzugsweise in der ersten Hälfte in Längsrichtung des Strömungskanals liegt. Längsrichtung des Strömungskanals meint im Rahmen der Erfindung die Erstreckung des Strömungskanals von der Eingangsöffnung zu der Auspressöffnung. Besonders bevorzugt ist der Wendepunkt in einem Bereich angeordnet, welcher Bereich ungefähr 30 % der Länge des Strömungskanals umfasst und sich von der Mitte des Strömungskanals in Richtung der Eingangsöffnung erstreckt. Durch die erfindungsgemäße S-kurvenförmige Ausbildung der Strömungskanalwandung wird in Verbindung mit der erfindungsgemäßen, kontinuierlichen Verjüngung des Strömungskanals vorgegeben, dass der Querschnitt der Eingangsöffnung größer ist, als der Querschnitt der Auspressöffnung. Empfohlenermaßen beträgt das Verhältnis des Durchmessers der Eingangsöffnung zum Durchmesser der Auspressöffnung 10 : 0,2, vorzugsweise 9 : 0,5 und besonders bevorzugt 8 : 0,7. Gemäß einer weiteren Ausführungsform beträgt das Verhältnis des Durchmesser der Eingangsöffnung zum Durchmesser der Auspressöffnung 7 : 1 bzw. ungefähr 7 : 1.

Gemäß einer besonders bevorzugten Ausführungsform ist die Kontur der Strömungskanalwandung durch eine Tangenskurve angegeben.

Gemäß einer Ausführungsform weist die Auslassdüse eine konische Mantelfläche und eine planare Stirnfläche auf, wobei die Auspressöffnung in der Stirnfläche angeordnet ist. Besonders bevorzugt ist die Auslassdüse in einer Dichtungshülse aufgenommen, wobei die Dichtungshülse fluiddicht an den Auslaufstutzen angeschlossen ist. Grundsätzlich ist es möglich, dass die Dichtungshülse eine Flanschverbindung mit weiteren Vorrichtungselementen, wie z. B. Transportleitungen, Tank und dergleichen, ermöglicht. Zweckmäßigerweise ist die Dichtungshülse aus einem Erdgas- und salzwasserbeständigen Werkstoff, vorzugsweise einem Stahl, gefertigt.

Gemäß einer bevorzugten Ausführungsform weist die Dichtungshülse eine konisch ausgebildete Dichtungsfläche auf, an welcher Dichtungsfläche die konische Mantelfläche der Auslassdüse anliegt, wobei die Stirnfläche der Auslassdüse auf einer ringförmigen Dichtungsfläche der Dichtungshülse aufliegt und wobei die Auspressöffnung fluchtend mit einer Öffnung in der ringförmigen Dichtungsfläche angeordnet ist. Vorteilhafterweise liegt die konische Mantelfläche bzw. die Stirnfläche der Auslassdüse fluiddicht an der komplementär konisch ausgebildeten Dichtungsfläche bzw. ringförmigen Dichtungsfläche der Dichtungshülse an, wenn die Reaktionsbedingungen in dem Reaktionsbehälter herrscht mit der Maßgabe eingestellt sind, dass eine Gasclathratbildung erfolgt. Es liegt im Rahmen der Erfindung, dass das in dem Reaktionsbehälter gebildete Gasclathrat in den Auslaufstutzen und von dort durch die Eingangsöffnung in den Strömungskanal der Auslassdüse sowie durch die Auspressöffnung der Auslassdüse und die Öffnung der Dichtungshülse aus dem Reaktionsbehälter gepresst wird.

Gemäß einer vorteilhaften Ausführungsform weist die konische Dichtungsfläche der Dichtungshülse eine Beschichtung bzw. eine Zwischenschicht auf, die an der Mantelfläche der Auslassdüse fluiddicht anliegt. Vorteilhafterweise ist die Zwischenschicht der Dichtungshülse zweckmäßigerweise clastisch verformbar und ist vorzugsweise aus einem Kunststoff, bevorzugt aus Polytetrafluorethylen gefertigt. Es hat sich als vorteilhaft herausgestellt, dass die Zwischenschicht druckabhängig verformbar ist, sodass im Betrieb der Vorrichtung eine fluiddichte Anlage der Auslassdüse an die Dichtungshülse gewährleistet ist. Gemäß einer besonders bevorzugten Ausführungsform ist die Zwischenschicht fluiddicht mit der Dichtungshülse verbunden.

Es ist möglich, dass die Anschlussdüse im Wesentlichen aus zumindest einem Kunststoff und vorzugsweise aus Polytetrafluorethylen und/oder Polyamid gefertigt ist. Gemäß einer Ausführungsform ist ein Anschlussdüsenkörper mit einer die Mantelfläche ausbildenden Beschichtung versehen, welche Beschichtung zur fluiddichten Anlage an die Dichtungsfläche der Dichtungshülse ausgebildet ist. Empfohlenermaßen ist in dem Anschlussdüsenkörper eine Innenbeschichtung zur Ausbildung der Strömungskanalwandung angeordnet. Es ist möglich, dass das Aggregat aus Anschlussdüsenkörper, Beschichtung und Innenbeschichtung aus einem bzw. dem gleichen Werkstoff gefertigt ist. Gemäß einer anderen Ausführungsform sind der Anschlussdüsenkörper, die Beschichtung und die Innenbeschichtung aus verschiedenen Werkstoffen gefertigt. Vorzugsweise sind die Innenbeschichtung und/oder die Beschichtung aus Polytetrafluorethylen und/oder Polyamid gefertigt.

Der Erfindung liegt die Erkenntnis zugrunde, dass mit der erfindungsgemäßen Vorrichtung mit hoher Funktionssicherheit in einem kontinuierlichen Verfahren Gasclathrate herstellbar sind. Die erfindungsgemäße Vorrichtung zeichnet sich dabei durch eine hervorragende Energieeffizienz aus. Wesentlich an der erfindungsgemäßen Vorrichtung ist die Auslassdüse, die aufgrund ihrer erfindungsgemäßen Ausgestaltung einen unkritisch kontrollierbaren und steuerbaren Austrag des in dem Reaktionsbehälters hergestellten Gasclathrates gewährleistet. Die Erfindung weist weiterhin den Vorteil auf, dass der Einsatz einer verschleißanfälligen Dichtung, die in einem weiten Druck- und Temperaturbereich einsetzbar sein muss, auf überraschend einfache Weise ausgeschlossen wird. Im Ergebnis zeichnet sich die erfindungsgemäße Vorrichtung durch einen sehr einfachen Aufbau, einen problemlosen Betrieb und hohe Funktionssicherheit aus. Insbesondere der Austrag des hergestellten Gasclathrates aus dem Reaktionsbehälter ist aufgrund der erfindungsgemäßen Ausbildung des Auslaufstutzens mit der daran angeschlossenen Auslassdüse unkritisch. Folglich weist die erfindungsgemäße Vorrichtung gegenüber dem Stand der Technik beachtliche Vorteile auf.

Nachfolgend wird die Erfindung anhand einer lediglich ein Ausführungsbeispiel darstellenden Zeichnung genauer erläutert. Es zeigen in schematischer Darstellung:
- Figur 1: eine erfindungsgemäße Vorrichtung zur Durchführung eines kontinuierlichen Verfahrens zur Herstellung von Gasclathraten,
- Figur 2: einen Querschnitt durch eine erfindungsgemäße Auslassdüse,
- Figur 3: eine perspektivische Aufsicht auf eine erfindungsgemäße Auslassdüse,
- Figur 4: eine perspektivische Unteransicht einer erfindungsgemäßen Auslassdüse,
- Figur 5: einen Querschnitt durch eine erfindungsgemäße Dichtungshülse und
- Figur 6: einen Querschnitt einer erfindungsgemäßen Dichtungshülse mit eingeführter Auslassdüse.

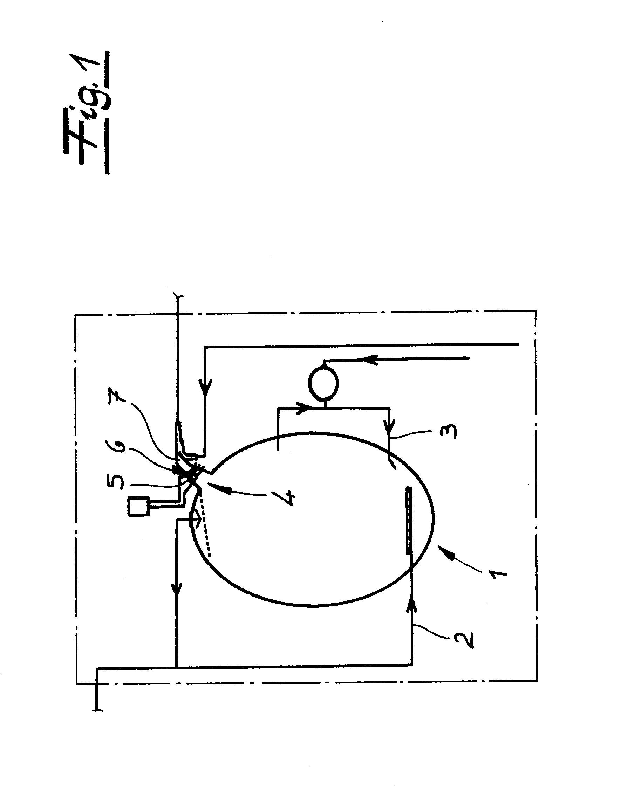

In Figur 1 ist ein Reaktionsbehälter 1 dargestellt, dem über eine Reaktionsgaszuführung 2 ein verdichtetes bzw. komprimiertes Reaktionsgas zugeführt wird. Weiterhin wird gemäß Figur 1 über eine Reaktionsflüssigkeitszuführung 3 die Reaktionsflüssigkeit in den Reaktionsbehälter 1 eingeführt. Zweckmäßigerweise und gemäß dem Ausführungsbeispiel gemäß Figur 1 sind in dem Reaktionsbehälter 1 ein Reaktionsdruck und eine Reaktionstemperatur mit der Maßgabe eingestellt, dass die Reaktionsflüssigkeit und das Reaktionsgas ein Gasclathrat bilden. In Figur 1 sind eine dafür erforderliche Druckeinheit und Temperiereinrichtung nicht dargestellt.

Da die spezifische Dichte des gebildeten Gasclathrates geringer ist als die Dichte der Reaktionsflüssigkeit, schwimmt das gebildete Gasclathrat auf der Reaktionsflüssigkeit auf. Vorzugsweise und gemäß dem Ausführungsbeispiel nach Figur 1 wird zur Aufrechterhaltung der Reaktionsbedingungen durch die Reaktionsgaszuführung 2 und die Reaktionsflüssigkeitszuführung 3 das Reaktionsgas und die Reaktionsflüssigkeit in den Reaktionsbehälter 1 nachgeführt. Das kontinuierlich in dem Reaktionsbehälter 1 gebildete Gasclathrat wird aufgrund der kontinuierlichen Volumenzunahme des gebildeten Gasclathrates in einen Auslaufstutzen 4 gepresst. In Figur 1 ist dargestellt, dass in dem Auslaufstutzen 4 eine zusätzliche Temperiervorrichtung 5 angeordnet ist, mit der die Temperatur des in den Auslaufstutzen 4 gepressten Gasclathratpfropfens 6 eingestellt wird.

An den Auslaufstutzen 4 ist vorzugsweise und gemäß dem Ausführungsbeispiel nach Figur 1 fluiddicht eine Auslassdüse 7 angeschlossen, in die der durch die Temperiervorrichtung 5 temperierte Gasclathratpfropfen 6 durch den Druck in dem Reaktionsbehälter 1 vorgeschoben wird.

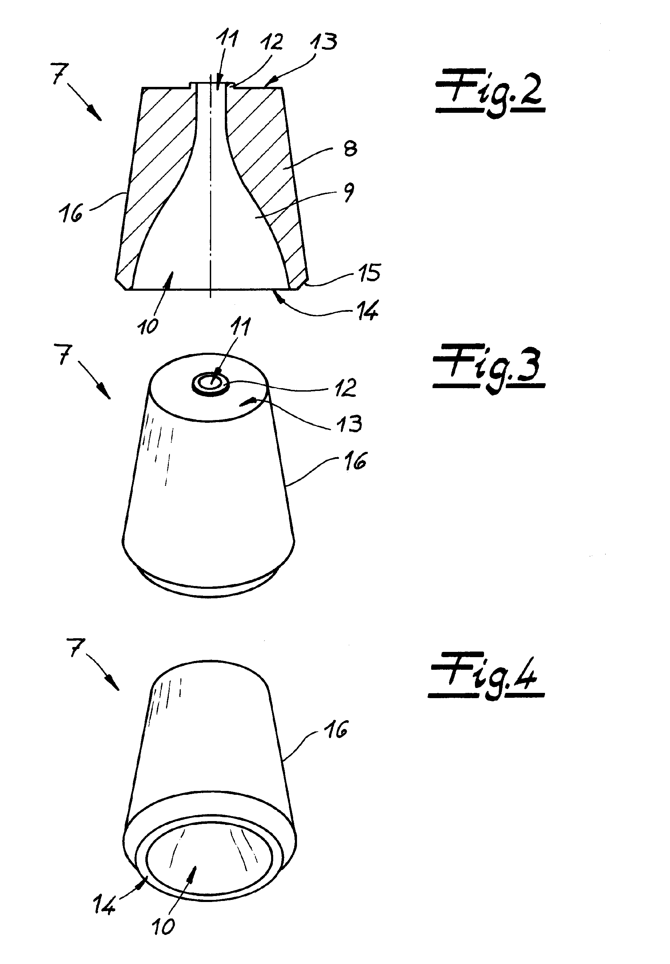

Die Auslassdüse 7 weist einen Düsenkörper 8 auf, in dem ein Strömungskanal 9 angeordnet ist. Aus Figur 2 und Figur 4 geht hervor, dass der Strömungskanal 9 rotationssymmetrisch ausgebildet ist. Eine Eingangsöffnung 10 und eine Auspressöffnung 11 sind folglich jeweils kreisförmig ausgebildet. Vorzugsweise und gemäß dem Ausführungsbeispiel gemäß Figur 2 beträgt das Verhältnis des Durchmessers der Eingangsöffnung 10 zu dem Durchmesser der Auspressöffnung 117 : 1.

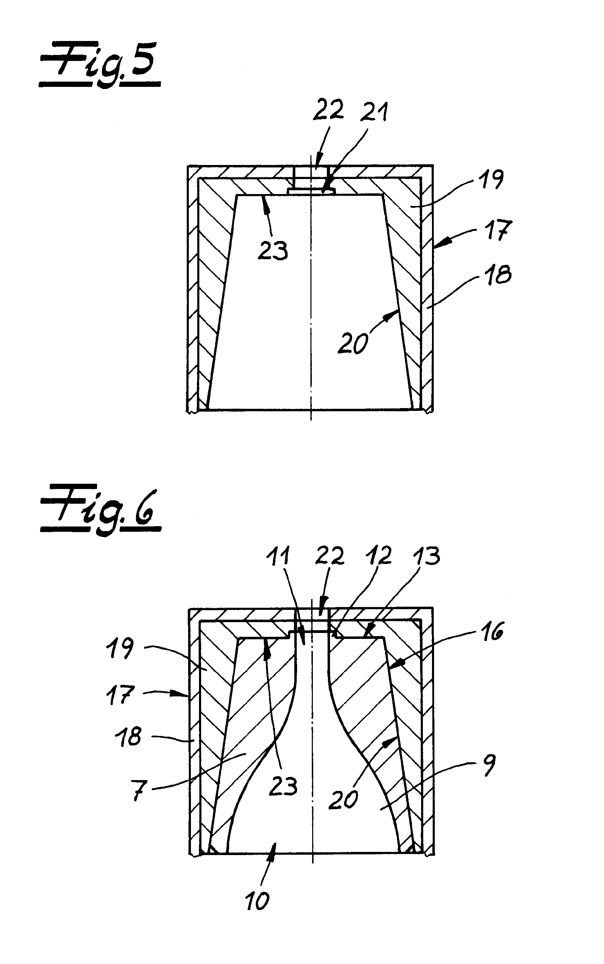

Weiterhin ist in Figur 2 und 6 dargestellt, dass eine Kontur des Strömungskanals 9 S-kurvenförmig ausgebildet ist. Der Strömungskanal 9 der Auslassdüse 7 verjüngt sich dabei kontinuierlich von der Eingangsöffnung 10 zu der Auspressöffnung 11. Gemäß dem Ausführungsbeispiel nach Figur 2 ist die Auspressöffnung 11 von einer ringförmigen Erhebung 12 umgeben, die über eine stirnseitige Dichtungsfläche bzw. planare Stirnfläche 13 der Auslassdüse 7 vorsteht. Vorzugsweise und gemäß den Darstellungen in den Figuren 2 bis 4 weist eine eingangsöffnungsseitige Stirnfläche 14 der Auslassdüse 7 eine Anfasung 15 auf. Weiterhin geht aus den Figuren 2 bis 4 hervor, dass eine Mantelfläche 16 der Auslassdüse 7 konusförmig ausgebildet ist. Vorzugsweise und in dem Ausführungsbeispiel gemäß den Figuren 2 bis 4 ist der Düsenkörper 8 aus Polytetrafluorethylen gefertigt.

In Figur 5 ist eine Dichtungshülse 17 dargestellt. Nicht dargestellt ist, dass die Dichthülse 17 fluiddicht an den Auslaufsstutzen 4 des Reaktionsbehälters 1 angeschlossen ist. In Figur 5 ist weiterhin dargestellt, dass die Dichtungshülse 17 einen Hülsenkörper 18 aufweist, an den im Inneren der Dichtungshülse 17 eine Zwischenschicht 19 angeschlossen ist. Die Zwischenschicht 19 ist derart ausgebildet, dass im montierten Zustand des Aggregates aus der Dichtungshülse 17 und der Auslassdüse 7 gemäß Figur 6 die Mantelfläche 16 fluiddicht an einer Dichtungsfläche 20 der Zwischenschicht 19 anliegt. Aus den Figuren 2 und 5 geht hervor, dass die Mantelfläche 16 und die Dichtungsfläche 20 komplementär konusförmig ausgebildet sind. In Figur 6 ist dargestellt, dass die ringförmige Erhebung 12, die um die Auspressöffnung 11 der Auslassdüse 7 verläuft, in eine Öffnung 21 der Zwischenschicht 19 greift, welche Öffnung 21 fluchtend mit einer Austrittsöffnung 22 in dem Hülsenkörper 18 angeordnet ist. Vorzugsweise und gemäß Figur 6 liegt die planare Stirnfläche 13 fluiddicht auf einer ringförmigen Dichtungsfläche 23 der Zwischenschicht 19 an, wenn die Auslassdüse 7 in die Dichtungshülse 17 eingeführt ist.

## Patentansprüche

1. Gasclathratherstellungs-Vorrichtung mit einem Reaktionsbehälter (1), mindestens einer Reaktionsgaszuführung (2) und mindestens einer Reaktionsflüssigkeitszuführung (3), wobei eine Druckeinheit vorgesehen ist, mit der der Druck in dem Reaktionsbehälter (1) einstellbar ist, wobei eine Temperiereinrichtung zur Einstellung der Temperatur in dem Reaktionsbehälter (1) vorgesehen ist, wobei an den Reaktionsbehälter (1) ein Aggregat mit einem Auslaufstutzen (4) und mit einer Auslassdüse (7) angeschlossen ist, welche Auslassdüse (7) einen Strömungskanal (9) aufweist, wobei das in dem Reaktionsbehälter (1) herstellbare Gasclathrat durch den Strömungskanal (9) der Auslassdüse (7) aus dem Reaktionsbehälter (1) pressbar ist, wobei sich der Strömungskanal (9) von einer Eingangsöffnung (10) zu einer Auspressöffnung (11) kontinuierlich verjüngt und rotationssymmetrisch ausgebildet ist und wobei eine Strömungskanalwandung S-kurvenförmig ausgebildet ist.

2. Vorrichtung nach Anspruch 1, wobei der Strömungskanal (9) einen Strömungswiderstand für das Gasclathrat aufweist, welcher Strömungswiderstand mit der Maßgabe eingestellt ist, dass das Gasclathrat durch einen Reaktordruck aus der Auslassdüse (7) gepresst wird bzw. pressbar ist, welcher Reaktordruck durch die vorzugsweise kontinuierliche Bildung des Gasclathrates in dem Reaktionsbehälter (1) und/oder in den Reaktionsbehälter (1) gefördertes Reaktionsgas und/oder Reaktionsflüssigkeit aufgebaut ist.

3. Vorrichtung nach einem der Ansprüche 1 oder 2, wobei die Strömungskanalwandung aus einem Kunststoff und vorzugsweise aus Polytetrafluorethylen (PTFE) besteht.

4. Vorrichtung nach einem der Ansprüche 1 bis 3, wobei die die Kontur der Strömungskanalwandung angebende S-förmige Kurve einen Wendepunkt aufweist, der vorzugsweise in der ersten Hälfte in Längsrichtung des Strömungskanals (9) liegt.

5. Vorrichtung nach einem der Ansprüche 1 bis 4, wobei die Kontur der Strömungskanalwandung durch eine Tangenskurve angegeben ist.

6. Vorrichtung nach einem der Ansprüche 1 bis 5, wobei die Auslassdüse (7) eine konische Mantelfläche (16) und eine planere Stirnfläche (13) aufweist und wobei die Auspressöffnung (11) in der Stirnfläche (13) angeordnet ist.

7. Vorrichtung nach einem der Ansprüche 1 bis 6, wobei die Auslassdüse (7) in einer Dichtungshülse (17) aufgenommen ist und wobei die Dichtungshülse (17) fluiddicht an den Auslaufstutzen (4) angeschlossen ist.

8. Vorrichtung nach Anspruch 7, wobei die Dichtungshülse (17) eine konisch ausgebildete Dichtungsfläche (20) aufweist, an welche Dichtungsfläche (20) die konische Mantelfläche (16) der Auslasshülse (7) anliegt, wobei die Stirnfläche (13) der Auslassdüse (7) auf einer ringförmigen Dichtungsfläche (23) der Dichtungshülse (17) aufliegt und wobei die Auspressöffnung (11) fluchtend mit einer Öffnung (21) in der ringförmigen Dichtungsfläche (23) angeordnet ist.

9. Vorrichtung nach einem der Ansprüche 7 oder 8, wobei die konische Dichtungsfläche (20) der Dichtungshülse (17) eine Beschichtung bzw. eine Zwischenschicht (19) aufweist, die an der Mantelfläche (16) der Auslassdüse (7) fluiddicht anliegt.

10. Vorrichtung nach Anspruch 9, wobei die Zwischenschicht (19) der Dichtungshülse (17) verformbar ist und vorzugsweise aus einem Kunststoff, bevorzugt aus PTFE gefertigt ist.

11. Vorrichtung nach einem der Ansprüche 1 bis 10, wobei die Auslassdüse (7) im Wesentlichen aus einem Kunststoff und vorzugsweise aus PTFE und/oder Polyamid gefertigt ist.
